# DEMANDE DE BREVET EUROPEEN

(11) **EP 0 720 100 A1**
(43) Date de publication de la demande: **03.07.1996**
(21) Numéro de dépôt: 95402869.2
(22) Date de dépôt: 19.12.1995
(51) Int. Cl.: G06F 13/40

(54) **Dispositif de leurrage d'un lien de communication**

(30) Priorité: 28.12.1994 FR 9415780
(71) Demandeur: THOMSON-CSF, 75008 Paris (FR)
(72) Inventeur: Grollet, Christophe, Thomson-CSF, F-92402 Courbevoie Cedex (FR); Blondel, Philippe, Thomson-CSF, F-92402 Courbevoie Cedex (FR); Duroi, Eric, Thomson-CSF, F-92402 Courbevoie Cedex (FR)
(74) Mandataire: Lincot, Georges

(57) **Abrégé**

Le dispositif consiste en un module de leurrage (5) interposé entre le port de communication et le lien de communication où un circuit de gestion de bidirectionalité (18) commande la transmission des signaux sur le lien de commmunication et vers le port voisin de telle manière que la transmission des signaux émis par le port émetteur et le port récepteur est invalidée par le passage à l'état inactif du signal CReqB reçu par le port émetteur, excepté pour le signal CAckB transmis au port récepteur, et de telle manière que la transmission des signaux reçus en entrée du port émetteur et récepteur est invalidée en entrée du port récepteur par le passage à l'état inactif du signal CReqB reçu par le port émetteur, puis en entrée du port émetteur par le passage à l'état inactif du signal CReqB présent au niveau du port récepteur.

Les applications concernent les transmissions entre processeurs de type 320 C 4X et abonnés distants ou à fréquence de fonctionnement très différente.

## Description

L'invention concerne un dispositif de leurrage d'un lien de communication. Le domaine est l'échange de données numériques sur bus de liaison et en particulier sur bus de communication de processeur de traitement de signal. L'invention s'applique tout particulièrement aux communications avec un processeur de type 320 C 4X, par exemple TMS 320 C 40 du fabricant Texas Instruments et elle sera décrite plus en détail à propos de ce processeur.

Le processeur possède un certain nombre d'interfaces d'entrées/sorties appelées ports de communication permettant de le relier à un autre de même type ou bien à d'autres périphériques spécifiques par des liaisons à haut débit , ou liens de communication.

Les ports de communication sont bidirectionnels et le principe d'émission réception sur le lien de communication est basé sur l'échange de jeton, port émetteur s'il possède le jeton, récepteur dans le cas contraire. Les transmissions de signaux, c'est à dire le transfert des mots de données ainsi que les transmissions des signaux de commande sur le lien sont soumises à des contraintes dues au protocole du port de communication du 320 C 4X, contraintes de synchronisation de signaux. Celles-ci se traduisent par des limitations de fonctionnement, en particulier des limitations de distance des liens de communication. Ces liaisons doivent être courtes, inférieures généralement à quelques mètres ou même plus courtes si les signaux d'échange sont émis par des amplificateurs tampons ou "buffers" pour respecter des conditions de sortance.

L'invention décrite ci-après consiste en une gestion du protocole d'échange des informations de manière à rendre ces échanges asynchrones par l'insertion de modules de leurrage entre les ports de communication et le lien de communication .

Par module de leurrage, on entend un circuit qui est capable de simuler des signaux de protocole d'échanges qui devraient normalement être émis ou reçus par le port de communication auquel ce module est associé.

Il s'agit d'un dispositif de leurrage lors d'un échange de données ou transfert de jeton entre deux abonnés dont au moins un processeur, sur un lien de communication, échange de données entre un émetteur et un récepteur prenant en compte un signal de présence de données provenant de l'émetteur, CStrB, dont l'état actif représente la présence de données, et un signal d'acquittement provenant du récepteur, CRdyB, dont l'état actif représente l'acquittement, l'émetteur étant défini par la possession d'un jeton dont le transfert s'effectue par échange d'un signal de requête émission provenant du récepteur, CReqB, dont l'état actif représente la requête en émission du récepteur et d'un signal d'acquittement de requête provenant de l'émetteur, CAckB, dont l'état actif représente l'acquittement, caractérisé en ce qu'un module de leurrage est interposé entre le port de communication de chaque abonné et le lien de communication, au voisinage du port de communication, en ce que les circuits du module de leurrage réalisent un leurrage du signal CStrB de telle manière que le signal effectivement reçu par le port de communication récepteur est mis à l'état inactif par le passage à l'état actif du signal CRdyB sortant de ce port, et en ce que ces circuits réalisent un leurrage du signal CReqB de telle manière que le signal effectivement reçu par le port de communication émetteur est mis à l'état inactif par le passage à l'état actif du signal CAckB sortant de ce port et cela indépendamment des signaux CStrB et CReqB transmis par les ports des correspondants.

Il s'agit également d'un dispositif de leurrage lors d'un échange de données ou transfert de jeton entre deux abonnés dont au moins un processeur, sur un lien de communication, échange de données entre un émetteur et un récepteur prenant en compte un signal de présence de données provenant de l'émetteur, CStrB, dont l'état actif représente la présence de données, et un signal d'acquittement provenant du récepteur, CRdyB, dont l'état actif représente l'acquittement, l'émetteur étant défini par la possession d'un jeton dont le transfert s'effectue par échange d'un signal de requête émission provenant du récepteur, CReqB, dont l'état actif représente la requête en émission du récepteur et d'un signal d'acquittement de requête provenant de l'émetteur, CAckB, dont l'état actif représente l'acquittement, caractérisé en ce qu'un module de leurrage est interposé entre le port de communication de chaque abonné et le lien de communication, au voisinage du port de communication, en ce qu'un circuit de gestion de bidirectionnalité dans chaque module de leurrage commande la transmission des signaux sur le lien de communication et vers le port voisin par la validation de circuits à état haute impédance, de telle manière que, dans une première étape, le sens de transmission des signaux, sauf le signal d'acquittement CAckB, est inversé sur le lien de communication et la transmission des signaux vers le port initialement récepteur est invalidée par le passage à l'état actif du signal CAckB transmis par le port au module de leurrage voisin, dans une deuxième étape la transmission des signaux vers le port initialement émetteur est invalidée et le sens de transmission du signal CAckB sur le lien est inversé par le passage à l'état actif du signal CAckB reçu par le module de leurrage à travers le lien.

L'invention permet de réaliser des liaisons sans limitation particulière sur la distance, en éliminant les problèmes de synchronisation pouvant apparaître lorsque la fréquence de fonctionnement des composants reliés entre eux est très différente ou lorsque les composants sont éloignés. Le protocole d'échange vu par les microprocesseurs et autres circuits reliés au lien de communication n'est en rien modifié. Aucune modification autre que l'adjonction de ces circuits de leurrage entre le port et le lien de communication n'est donc nécessaire. La réalisation de ces dispositifs est simple, peu coûteuse et universelle dans le sens qu'elle peut être adaptée à tout circuit exploitant le même type de protocole.

On va maintenant décrire plus précisément l'invention en référence aux dessins annexés dans lesquels :
- la figure 1 représente le chronogramme des signaux CStrB et CRdyB
- la figure 2 représente le chronogramme des signaux CReqB, CAckB, CStrB, CRdyB, CData lorsque le port de communication est demandeur du jeton
- La figure 3 représente le chronogramme des signaux CReqB, CAckB, CStrB, CRdyB, CData lorque le port de communication est détenteur du jeton
- la figure 4 représente les modules de leurrage insérés dans la liaison de communication
- la figure 5 représente un module de leurrage
- la figure 6 représente les phases de transitions des modules de leurrage.

Les contraintes relatives à l'utilisation des microprocesseurs 320 C 4X ont lieu à la fois sur le transfert des mots et sur l'échange de jeton. Ces contraintes sont explicitées ci-après, en utilisant les notations suivantes :

On désigne les 2 correspondants aux extrémités d'un lien de communication, c'est à dire deux 320 C 4X ou un 320 C 4X et un autre périphérique, par les lettres A et B. La désignation des signaux en entrée ou en sortie des ports de communication A et B commence par la lettre C. La désignation des signaux en entrée ou en sortie du bus de liaison ou lien de communication se termine par les lettres AB.

On désigne par P la période de fonctionnement du processeur 320 C 4X. Elle peut être de 40 ou 50 ns suivant la version du composant considérée ou même inférieure pour les dernières versions.

Contraintes sur le transfert des mots :

Les données de 32 bits sont émises par le port du processeur sous forme d'octets. La série de 4 octets consécutifs, le poids faible d'abord, le poids fort en dernier, est envoyée sur les lignes de données du lien de communication depuis le port de communication du microprocesseur vers le port de communication récepteur. Lorsque le port de communication du processeur est récepteur, le mot de 32 bits est reçu sous forme de 4 octets successifs. La prise en compte des octets se fait par l'échange de 2 signaux : réception de CStrB ou signal "Strobe" indiquant la présence des données et émission de CRdyB ou signal "Ready" indiquant l'acquittement, c'est à dire la prise en compte des données (niveaux bas actifs).

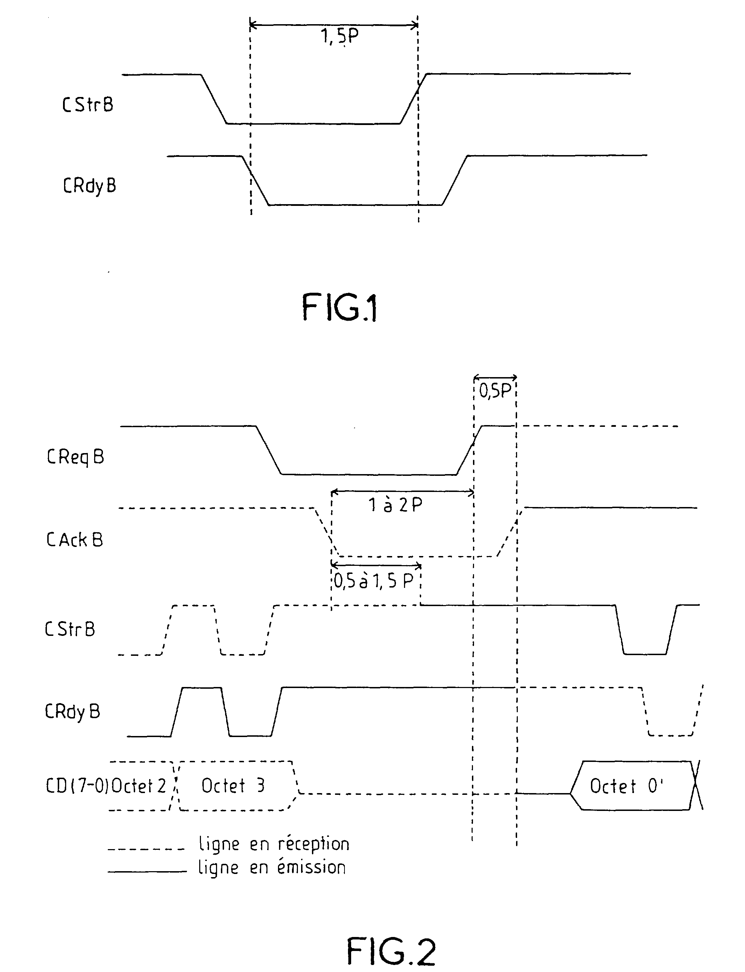

Le signal CStrB reçu doit être remonté au plus tard 1,5 P après le front descendant de CRdyB, à la fin de la réception du quatrième octet d'un mot de 32 bits. Cette contrainte est symbolisée sur la figure 1 représentant, en fonction du temps, le niveau de ces signaux de synchronisation. Si cette contrainte n'est pas satisfaite, le port de communication récepteur interprète le signal CStrB à l'état bas comme ayant été de nouveau activé et prend alors en compte un nouvel octet de manière incorrecte. Cette prise en compte crée un décalage sur les mots suivants. L'erreur créée ne peut être résolue que par une réinitialisation du processeur 320 C 4X.

Contraintes sur l'échange de jeton :

Le protocole d'échange de jeton est mis en oeuvre lors d'une demande d'émission d'un abonné récepteur. Le retournement du port de communication, c'est à dire le passage d'émetteur à récepteur s'il possédait le jeton ou l'inverse s'il prend le jeton, est réalisé par l'échange de 2 signaux, CReqB ou signal "Request" traduisant une requête d'émission et CAckB ou signal "Acknowledge" indiquant un acquittement de la requête, et le relâchement du jeton.

Dans toute cette description, on considère que le niveau actif des signaux est le niveau bas et que le front d'activation des signaux est donc le front descendant.

La figure 2 représente les signaux échangés au niveau du port de communication demandeur du jeton, lors du transfert de jeton. La ligne CReqB est alors en émission (ligne en trait plein). Après acquittement de la requête par l'abonné possédant le jeton, la ligne CReqB passe en réception (ligne en pointillés). L'inversion de sens est réalisée environ 0,5 P après le front montant déclenché par le niveau bas du signal correspondant à l'acquittement. Si la liaison est longue, de l'ordre du mètre ou au delà, la ligne CReqB est à état haute impédance pendant un laps de temps se situant immédiatement après ce passage en réception, du fait du temps de transmission des signaux sur le lien, et avant que le port devenant récepteur ne pilote cette ligne. Un phénomène de réflexion peut alors entraîner une prise en compte erronée d'un niveau bas par le port devenu émetteur, qui est interprétée comme une demande de jeton de l'autre port de communication, ce qui entraîne un blocage du protocole d'échange de jeton.

Au cours du retournement du lien, le signal CAckB reçu par le port de communication doit rester à l'état bas pendant au moins une période 1P pour que ce port de communication demandeur du jeton prenne en compte l'acquittement de sa demande, entraînant une remontée du signal CReqB.

La ligne CStrB passe en émission 0,5 à 1,5 P après le front descendant de ce signal CAckB, la ligne CRdyB passe en réception en même temps que CReqB.

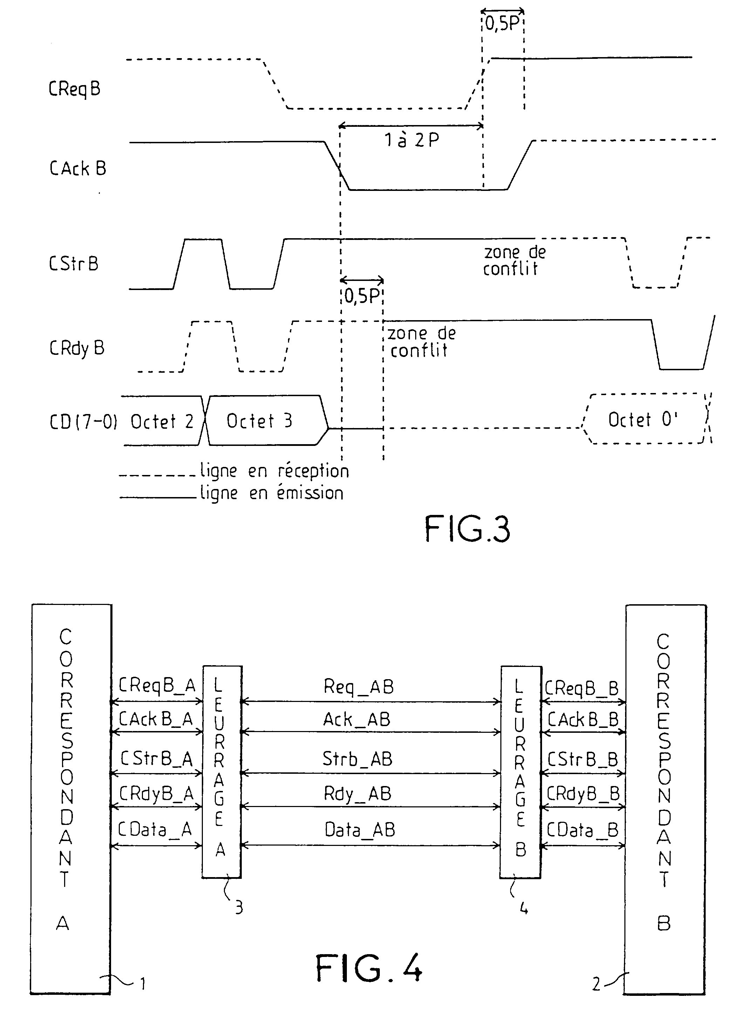

La figure 3 représente les signaux échangés au niveau du port de communication possédant le jeton, lors du transfert du jeton. Ici, la ligne CReqB est en réception, passe à l'état bas lorsque l'autre port de communication demande le transfert du jeton et la ligne CAckB émet ensuite un signal d'acquittement au niveau bas indiquant le relâchement du jeton.

Le sens des signaux CRdyB et CStrB est inversé 0,5 P après le front descendant de CAckB pour l'un, 0,5 P après le front montant de CReqB pour l'autre.

Ainsi se crée un conflit pour ces deux signaux, leur ligne étant, pendant un laps de temps, émettrice à partir des deux ports de communication. La confrontation des figures 2et 3 montre ce fait.

Ce conflit est d'autant plus long que le port de communication demandeur du jeton met du temps à répondre à l'acquittement par relèvement du signal CReqB. C'est le cas lorsque les deux ports de communication sont éloignés ou sont à des fréquences de fonctionnement très différentes. Cette anomalie de fonctionnement est particulièrement gênante lorsque les ports de communication possèdent des référentiels de tension différents.

Enfin, une autre contrainte existe au niveau du signal CReqB. Le port de communication détenteur du jeton et recevant le signal de requête ne prend en compte sa remontée qu'à condition que ce signal soit relevé moins de 2P après le front descendant du signal d'acquittement CAckB.

Le procédé ci-après décrit permet de s'affranchir de tous ces problèmes de compatibilité, sans modifier les protocoles d'échanges au niveau des ports de communication.

Pour ce faire, le changement de sens des ports de communication est géré par des modules de leurrage. Le principe est de leurrer le port de communication du processeur et de l'autre abonné pour contourner les contraintes précédemment exposées, en conservant la forme des signaux et le protocole du port de communication. Pour satisfaire ces contraintes, le leurrage d'un port de communication se fait par l'intermédiaire d'un module de leurrage au plus près du port de communication . Il consiste à gèrer la transmission des signaux de contrôle du port de communication, c'est à dire les signaux CStrB, CRdyB, CReqB, CAckB ainsi que les données au niveau de chaque correspondant. Ces modules sont donc en coupure sur le lien de communication comme représenté sur la figure 4.

La figure 4 représente 2 abonnés 1 et 2 ou correspondants A et B reliés entre eux par un lien de communication comportant entre autres les signaux de contrôle et les données, avec, en coupure sur ce lien et près de chaque correspondant un module de leurrage 3 pour le correspondant A et un module de leurrage 4 pour le correspondant B.

La logique de leurrage des modules de leurrage se décompose en trois fonctions principales :
- leurrage au niveau du mot
- leurrage au niveau de l'échange de jeton
- gestion de la bidirectionnalité.

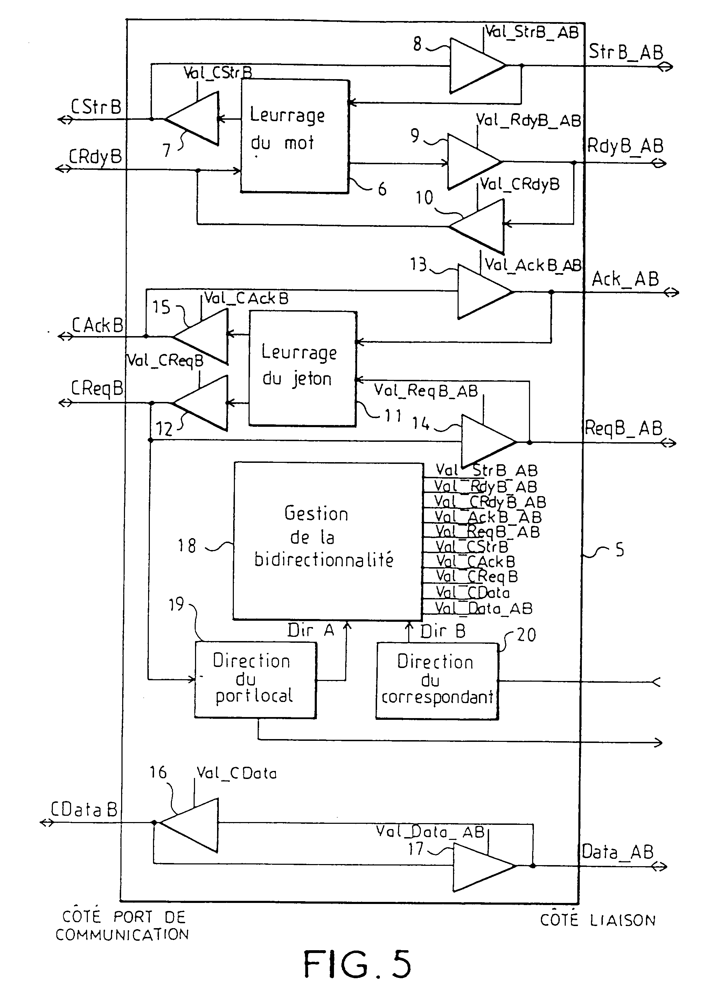

Le schéma de la figure 5 représente ces différentes fonctions réalisées dans un module de leurrage 5.

Lorsque le port de communication est récepteur, un circuit de leurrage du mot 6 reçoit l'information StrB_AB provenant du correspondant émetteur. Il transmet le front descendant de l'impulsion StrB_AB sur la liaison CStrB, par l'intermédiaire d'un "driver tri-state" ou circuit de commande 7 ayant trois états de sortie : niveau bas, niveau haut et état haute impédance. Tous les circuits de ce type sont appelés driver par la suite. Le signal CRdyB provenant du port de communication est transmis à l'entrée du circuit de leurrage du mot 6 pour que ce dernier contrôle la fin de l'acquittement et, sur le niveau actif bas reçu ou le front descendant, commande la mise au niveau haut, inactif, du signal CStrB transmis vers le port de communication par l'intermédiaire du driver 7 et vers le lien de communication par l'intermédiaire d'un autre driver 8 . Le signal CRdyB, en sortie du circuit de leurrage, est transmis vers le lien de communication par un driver 9. Dans l'autre sens, ce signal est envoyé vers le port de communication via le circuit driver 10.

Ainsi, le fait de forcer le relèvement du signal CStrB en fin d'acquittement élimine la contrainte sur le transfert des mots.

Lorsque le port de communication est émetteur, un circuit de leurrage du jeton 11 reçoit le signal ReqB_AB du lien de communication, provenant du correspondant demandeur du jeton, pour le transmettre, par l'intermédiaire d'un driver 12, au port de communication du processeur possédant le jeton. Ce port de communication répond en transmettant un niveau bas du signal CAckB vers le lien de communication par l'intermédiaire d'un driver 13. Ce signal est renvoyé en entrée du circuit de leurrage du jeton qui va forcer, sur ce niveau bas de CAckB ou le front descendant, la remontée du signal CreqB transmis au port. Comme on le verra plus loin, ce front montant fait changer la direction du port local Dir A et valide le signal CReqB sur le lien par l'intermédiaire du driver 14, résolvant ainsi le problème de réflexion sur la ligne précédemment cité.

Lorsque le port de communication est demandeur du jeton, le front descendant du signal AckB_AB provenant du possesseur de jeton est transmis à l'entrée du circuit de leurrage du jeton 11 qui met le signal de sortie CAckB à l'état bas sur le front descendant de AckB_AB, signal transmis au port de communication par l'intermédiaire du driver 15. Il maintient ainsi le signal au niveau bas. En effet, la durée au niveau bas du signal transmis est trop courte pour être prise en compte directement, du fait du relèvement du signal par le port possesseur de jeton, de façon asynchrone après le front montant de CReqB. Lorsque le port de communication a pris en compte ce signal CAckB, il relève le signal CReqB. Ce signal traverse le circuit driver 14 pour être transmis à l'entrée du circuit de leurrage du jeton 11. Son front montant commande, dans ce circuit, le relèvement du signal CAckB transmis au port.

Ainsi, le signal CAckB a été maintenu à zéro le seul temps nécessaire au port de communication pour le prendre en compte et relever le signal CReqB. Les signaux CReqB et CAckB sont remontés au plus vite, permettant de minimiser les temps de conflits précédemment explicités.

Les données traversent le module de leurrage, du lien de communication vers le port de communication, par l'intermédiaire de circuits drivers 16, du port de communication vers le lien de communication, par l'intermédiaire de circuits driver 17.

Un circuit de gestion de la bidirectionnalité 18 transmet les commandes de validation de tous les drivers pour les valider sur la ligne qu'ils pilotent ou les mettre en état haute impédance.

Ces validations sont fonction de 2 signaux reçus Dir A et Dir B.

Dir A correspond à la direction du port local. Le circuit 19 espionne le signal CReqB pour définir la valeur de Dir A transmise au circuit 18 à partir d'un état initial. Sur le front montant de ce signal, correspondant au changement de direction du port, le bit Dir A change de valeur. Cette information est également transmise au correspondant sur une liaison spécifique.

Dir B est relatif à la direction du correspondant. Le circuit 20 reçoit l'information de changement d'état du correspondant, définie par le front montant du signal CReqB côté correspondant, sur une liaison spécifique le reliant au module de leurrage du correspondant et transmet cette information au circuit de gestion 18.

La direction du correspondant peut également être déterminée par l'exploitation des signaux AckB_AB et ReqB_AB, évitant ainsi les deux liaisons spécifiques supplémentaires, le signal Dir A étant également transmis au circuit 20 pour autoriser ce changement d'état de Dir B.

Pour certains types d'abonnés, le signal indiquant la direction de l'abonné provient directement du port de communication. Les circuits 19 et 20 sont alors inutiles. Les informations de direction de l'abonné et du correspondant sont échangées par 2 liaisons spécifiques, sans nécessiter de traitement particulier par les leurres.

Ces directions permettent d'assurer le séquencement des validations et le fonctionnement des modules de leurrage. A l'initialisation, chaque module a connaissance de la direction du port de communication auquel il est connecté.

A l'initialisation, on suppose le port de communication A émetteur, le port de communication B récepteur. Les signaux de direction des ports de communication, Dir A et Dir B, sont positionnés à zéro lors de l'initialisation. Le passage à 1 d'un de ces signaux indique un changement de sens du port correspondant (passage d'émetteur à récepteur ou inversement).

Le changement de sens de la liaison se réalise en 2 étapes successives, correspondant chacune à un état des modules de leurrage.

A l'initialisation, les 2 modules de leurrage sont à l'état S1 :
Etat S1 : Dir A, Dir B = (0,0)

C'est un état stable. Les deux correspondants A et B sont dans des sens opposés.

La première étape correspond au passage de l'état S1 à l'état S2, atteint en faisant passer le port de communication A d'émetteur à récepteur :
Etat S2 : Dir A, Dir B = (1,0)

Ainsi, le correspondant A a accepté la requête en émission du correspondant B. Il transmet le signal d'acquittement qui relève le signal CReqB reçu par le port A et passe ainsi en réception par l'intermédiaire de son module de leurrage. Le signal Dir A change de valeur et, transmis au correspondant, le fait passer également dans l'état S2 avec un décalage dû au temps de propagation.

La deuxième étape correspond au passage de l'état S2 à l'état S3, atteint en faisant passer le port de communication B de récepteur à émetteur.
Etat S3 : Dir A, A, Dir B = (1,1)

Le correspondant B reçoit l'acquittement de sa demande qui fait relever le signal CReqB et change de sens. En effet, l'équivalent du circuit 19, côté correspondant, change la valeur de Dir B sur ce front montant. Cette information est transmise au leurre du port A qui, à son tour, passe à l'état S3. Les deux correspondants sont dans des sens opposés.

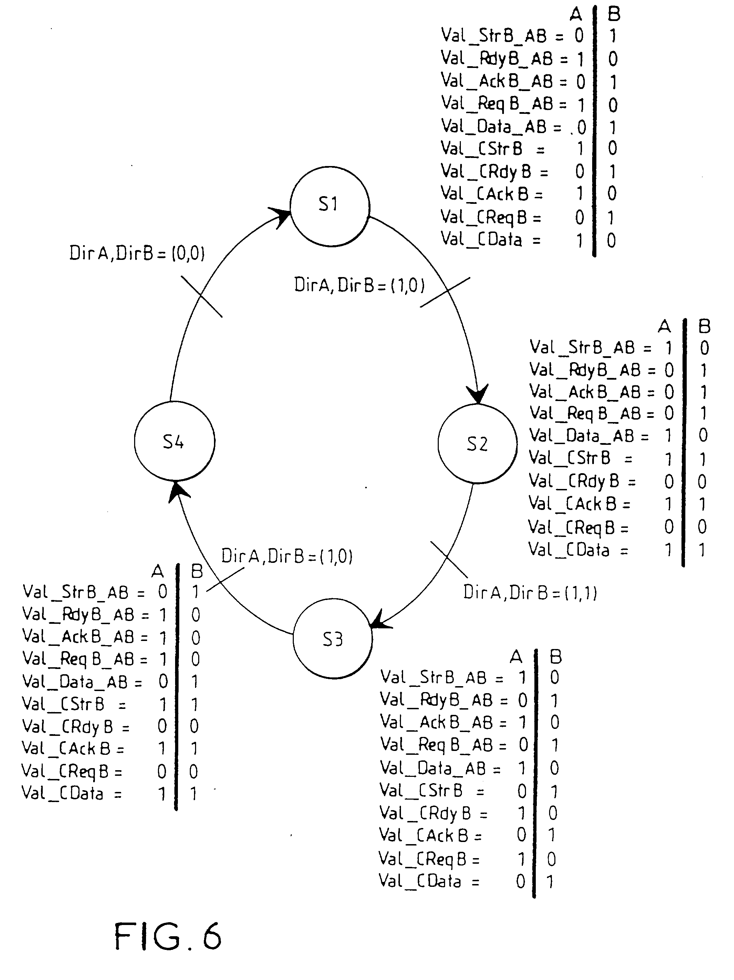

La figure 6 représente le passage de l'état S1 à l'état S3, par l'intermédiaire de l'état S2, ainsi que le retour à l'état S1, par l'intermédiaire de l'état S4. Cet état intermédiaire S4 correspond à l'état S2 mais avec les ports A et B inversés puisque l'état précédent S3 voit le correspondant A récepteur et le correspondant B émetteur. En tenant compte de cet état précédent :
Etat S4 : Dir A, Dir B = (1,0)

Le correspond émetteur B a accepté la requête en émission de A et change de sens grâce au module de leurrage. Les deux correspondants sont récepteurs.

Le passage de l'état S4 à l'état S1 correspond au passage du port de communication A de récepteur à émetteur.

Ainsi, c'est selon la séquence et la valeur des signaux Dir A, Dir B que sont définis les différents signaux de validation des drivers des modules de leurrage pilotant le lien de communication et les signaux en entrée des ports de communication. Ces signaux, actifs à l'état bas, sont définis sur la figure 6 en fonction des états S1 à S4 et pour chacun des modules de leurrage des abonnés A et B.

Par la suite, et pour les signaux se terminant par AB donc transitant sur le lien, on différencie les signaux de validation des circuits du module de leurrage du correspondant A en leur attribuant effectivement la terminaison AB, des signaux de validation des circuits du module de leurrage du correspondant B en leur attribuant la terminaison BA.

Par exemple Val StrB_AB commande le driver du module de leurrage du correspondant A, module appelé leurre A, Val StrB_BA commande le driver du module de leurrage du correspondant B ou leurre B.
Etat S1

Les signaux CAckB, CStrB et CData sont validés en sortie du leurre A vers le lien :
Val AckB_AB = 0
Val StrB_AB = 0
Val Data_AB = 0

lls sont validés en entrée du port B :
Val CAckB_B = 0
Val CStrB_B = 0
Val CData_B = 0

Les signaux CReqB et CRdyB sont validés en sortie du leurre B vers le lien :
Val ReqB_BA = 0
Val RdyB_BA = 0

lls sont validés en entrée du port A :
Val CReqB_A = 0
Val CRdyB_A = 0

L'état S3 correspond à ce même état stable, dans lequel A et B sont inversés. Pour obtenir les signaux de validation correspondant à cet état, il suffit donc d'intervertir A et B.

Par exemple Val AckB_AB= 0 devient Val AckB_BA = 0 et Val ReqB_A = 0 devient Val ReqB_B = 0.

L'état S2 est l'état intermédiaire non stable ou étape transitoire pour arriver à l'état S3. Cet état est déclenché par le front montant du signal CReqB forcé par le circuit de leurrage du jeton du leurre A puis immédiatement après par le front montant du signal CReqB au niveau du leurre B.
Etat S2

Les signaux CStrB et CData provenant du leurre B deviennent autorisés sur le lien :
Val StrB_BA = 0
Val Data_BA = 0

Ces signaux ne sont pas encore validés en entrée du port A :
Val CStrB_A =l 1
Val CData_A = 1

Les autres signaux autorisés sur le lien sont CRdyB et CReqB provenant du leurre A :
Val RdyB_AB = 0
Val ReqB_AB = 0

Ces signaux sont validés en entrée du port B :
Val CRdyB_B = 0
Val CReqB_B = 0

et restent validés en entrée du port A :
Val CRdyB_A = 0
Val CReqB_A = 0

Enfin, le signal CAckB est toujours validé sur le lien à partir du leurre A mais sa transmission est bloquée au niveau de l'entrée du port B.
Val CAckB_B =1

Les ports de communication A et B sont ainsi considérés comme récepteurs.

Les drivers non mentionnés sont considérés comme non validés donc à l'état haute impédance (signal de validation à 1).

Les transitions autres que celles décrites sont des cas d'erreurs. Il est alors possible de détecter ces cas d'erreurs pour les corriger par une logique remettant les ports de communication en cohérence.

L'état S2 peut être défini de la manière suivante : les signaux émis par le port émetteur et le port récepteur à l'état précédent sont invalidés par les leurres dans cet état transitoire.

Ainsi, les signaux CStrB, CData émis par le port A et CReqB et CRdyB émis par le port B sont invalidés en émission sur le lien :
Val StrB_AB = 1
Val Data_AB = 1
Val ReqB_BA = 1
Val RdyB_BA = 1

Une exception, le signal CAckB transmis vers le port récepteur, demandeur du jeton.

En ce qui concerne les signaux reçus par le port récepteur à l'état précédent, ils sont invalidés par le leurre vers l'entrée du port récepteur, sur le front montant du signal CReqB reçu par le port émetteur et correspondant au passage de Dir A à 1.

Ainsi les signaux CStrB, CAckB, CData reçus par le port récepteur sont invalidés dans l'état S2 :
Val CStrB_B = 1
Val CAckB_B = 1
Val CData_B =1

Les autres signaux CReqB et CRdyB reçus par le port émetteur à l'état précédent ne sont invalidés par le leurre vers l'entrée du port émetteur que sur le front montant du signal CReqB reçu par le port récepteur et correspondant au passage de Dir B à 1, c'est à dire à l'état S3 :
Val CReqB_A = 1
Val CRdyB_A = 1

D'une manière générale, en raisonnant sur le sens de transmission des signaux, il y a inversion du sens de transmission sur le lien, sauf pour le signal CAckB, et la transmission des signaux vers le port initialement récepteur est invalidée, dans une première étape correspondant à l'état S2, la transmission des signaux vers le port initialement émetteur est invalidée et le sens de transmission du signal CAckB est inversé sur le lien dans une deuxième étape correspondant à l'état S3.

Le dispositif peut être exploité sur une liaison entre un circuit TMS 320 C 40 et un composant spécifique, tel qu'un ASIC ou composant programmable dont la fréquence de fonctionnement est très inférieure à celle du TMS 320 C 40.

Les signaux transmis par les drivers peuvent utiliser différents types de logique ou normes ,TTL, RS 422, RS 485 ..., en fonction des longueurs de liaison désirées et du débit demandé.

## Revendications

1. Dispositif de leurrage lors d'un échange de données ou transfert de jeton entre deux abonnés dont au moins un processeur, sur un lien de communication, échange de données entre un émetteur et un récepteur prenant en compte un signal de présence de données provenant de l'émetteur, CStrB, dont l'état actif représente la présence de données, et un signal d'acquittement provenant du récepteur, CRdyB, dont l'état actif représente l'acquittement, l'émetteur étant défini par la possession d'un jeton dont le transfert s'effectue par échange d'un signal de requête émission provenant du récepteur, CReqB, dont l'état actif représente la requête en émission du récepteur et d'un signal d'acquittement de requête provenant de l'émetteur, CAckB, dont l'état actif représente l'acquittement, caractérisé en ce qu'un module de leurrage (5) est interposé entre le port de communication de chaque abonné et le lien de communication, au voisinage du port de communication, en ce que les circuits du module de leurrage (6,11,18) réalisent un leurrage du signal CStrB de telle manière que le signal effectivement reçu par le port de communication récepteur est mis à l'état inactif par le passage à l'état actif du signal CRdyB sortant de ce port, et en ce que ces circuits réalisent un leurrage du signal CReqB de telle manière que le signal effectivement reçu par le port de communication émetteur est mis à l'état inactif par le passage à l'état actif du signal CAckB sortant de ce port et cela indépendamment des signaux CStrB et CReqB transmis par les ports des correspondants.

2. Dispositif de leurrage selon la revendication 1, caractérisé en ce que les circuits du module de leurrage (6,11,18) réalisent un leurrage du signal CAckB reçu par le port, en faisant passer le signal CAckB à l'état inactif lors du passage à l'état inactif du signal CReqB, indépendamment du signal CAckB transmis par le port émetteur, de telle manière que le signal effectivement reçu par le port demandeur de jeton est maintenu à l'état actif le seul temps nécessaire au passage à l'état inactif du signal de requête transmis par ce port.

3. Dispositif de leurrage lors d'un échange de données ou transfert de jeton entre deux abonnés dont au moins un processeur, sur un lien de communication, échange de données entre un émetteur et un récepteur prenant en compte un signal de présence de données provenant de l'émetteur, CStrB, dont l'état actif représente la présence de données, et un signal d'acquittement provenant du récepteur, CRdyB, dont l'état actif représente l'acquittement, l'émetteur étant défini par la possession d'un jeton dont le transfert s'effectue par échange d'un signal de requête émission provenant du récepteur, CReqB, dont l'état actif représente la requête en émission du récepteur et d'un signal d'acquittement de requête provenant de l'émetteur, CAckB, dont l'état actif représente l'acquittement, caractérisé en ce qu'un module de leurrage (5) est interposé entre le port de communication de chaque abonné et le lien de communication, au voisinage du port de communication, en ce qu'un circuit de gestion de bidirectionnalité (18) dans chaque module de leurrage (5) commande la transmission des signaux sur le lien de communication et vers le port voisin par la validation de circuits à état haute impédance, de telle manière que, dans une première étape, le sens de transmission des signaux, sauf le signal d'acquittement CAckB, est inversé sur le lien de communication et la transmission des signaux vers le port initialement récepteur est invalidée par le passage à l'état actif du signal CAckB transmis par le port au module de leurrage voisin, dans une deuxième étape la transmission des signaux vers le port initialement émetteur est invalidée et le sens de transmission du signal CAckB sur le lien est inversé par le passage à l'état actif du signal CAckB reçu par le module de leurrage à travers le lien.

4. Dispositif selon l'une des revendications précédentes, caractérisé en ce que le processeur est un circuit de type 320 C 4X.

5. Dispositif selon l'une des revendications précédentes, caractérisé en ce que le processeur est un circuit TMS 320 C 40.
